# EUROPEAN PATENT SPECIFICATION

(11) **EP 0 412 807 B1**
(45) Date of publication and mention of the grant of the patent: **07.02.1996**
(21) Application number: 90308744.3
(22) Date of filing: 08.08.1990
(51) Int. Cl.: G11B 23/087, G11B 23/38

(54) **Magnetic tape cassette**
Magnetbandkassette
Cassette à bande magnétique

(30) Priority: 08.08.1989 AR 314612; 01.08.1990 AR 317513
(43) Date of publication of application: 13.02.1991
(73) Proprietor: Kaplan, Osvaldo, Buenos Aires (AR)
(72) Inventor: Kaplan, Osvaldo, Buenos Aires (AR)
(74) Representative: Pearce, Anthony Richmond

(56) References cited:
- EP-A- 0 267 616
- CA-A- 1 161 013
- CH-A- 674 429
- GB-A- 2 119 752
- US-A- 4 345 540
- US-A- 4 779 729

## Description

The present invention relates to tape cassettes and has for its object to provide a tape cassette whereon dynamic visual effects are produced to create a publicity message, a visual communication or a visually decorative or entertaining effect, when the tape cassette is in use, in particular in the normal forward direction of movement of the reels of the cassette.

US-A-4345540 discloses a tape cassette comprising a housing containing a pair of tape reels having oblique marks thereon which are viewable externally through viewing areas of the housing so that the optical effect produced by the oblique marks when the tape reels are rotating facilitates visualisation of tape transport.

According to the present invention, there is provided a tape cassette comprising a housing containing a pair of tape reels rotatably mounted therein, at least one of the reels having a disk with a plurality of marks thereon which obliquely cross viewing areas provided in the housing, so as to produce an optical effect when the reels are rotated characterized in that the viewing areas contain a transparent picture such that a dynamic optical effect originates from the cooperation of said marks with said picture.

As far as I am aware, this has never before been achieved on tape cassettes. Phonographic records are known whereon a label is designed to produce a stroboscopic effect, either for purely aesthetic reasons, or for the purpose of controlling the adequate speed selection for reproduction purposes.

In the present invention, use is made of rotation of at least one cassette reel relative to the cassette housing to produce optical effects of a wavy shape or of a turbulence or interference which, when combined with a picture, enable its use as information, decoration or publicity tools.

This is advantageous since, when used for publicity purposes, it will somewhat compensate and consequently offset the production costs of the cassettes and therefore making them more accessible.

The publicity using the new optical effects will be preferably related or have an affinity with the public it addresses, their generation range, etc. (for example if a cassette is for pop music, for young people, the publicity could be non-alcoholic drinks, young peoples' clothes, sports, etc.)

With regard to the cassette itself, it can conveniently maintain its structure and basic characteristics as well as its normal operating performance; very little modifications are needed in the structure and arrangement of the cassette and its reels in order to achieve the above mentioned effect.

One of the most preferred production methods is to arrange for a printed drawing to be on at least one separate sheet (or plate) in the cassette side and on the reels. Alternatively, the sheet(s) or plate(s) is or are adhesively secured internally or externally to the side of the cassette itself.

Therefore, the uses to which a tape cassette according to the present invention can be put will be readily appreciated, it can for example be used for publicity reasons, aesthetic or information uses, and this applies to audio, video, computer game or magazines cassettes.

Embodiments of the present invention will now be described, by way of example, with reference to the accompanying drawings, in which:-
Figure 1 is a perspective view of an embodiment of tape cassette according to the present invention,
Figure 2 is a plan view of the tape cassette of Figure 1,
Figure 3, is a transverse section of the tape cassette, of Figs 1 and 2, and
Figure 4 are plan views of different disks for use in the tape cassette.

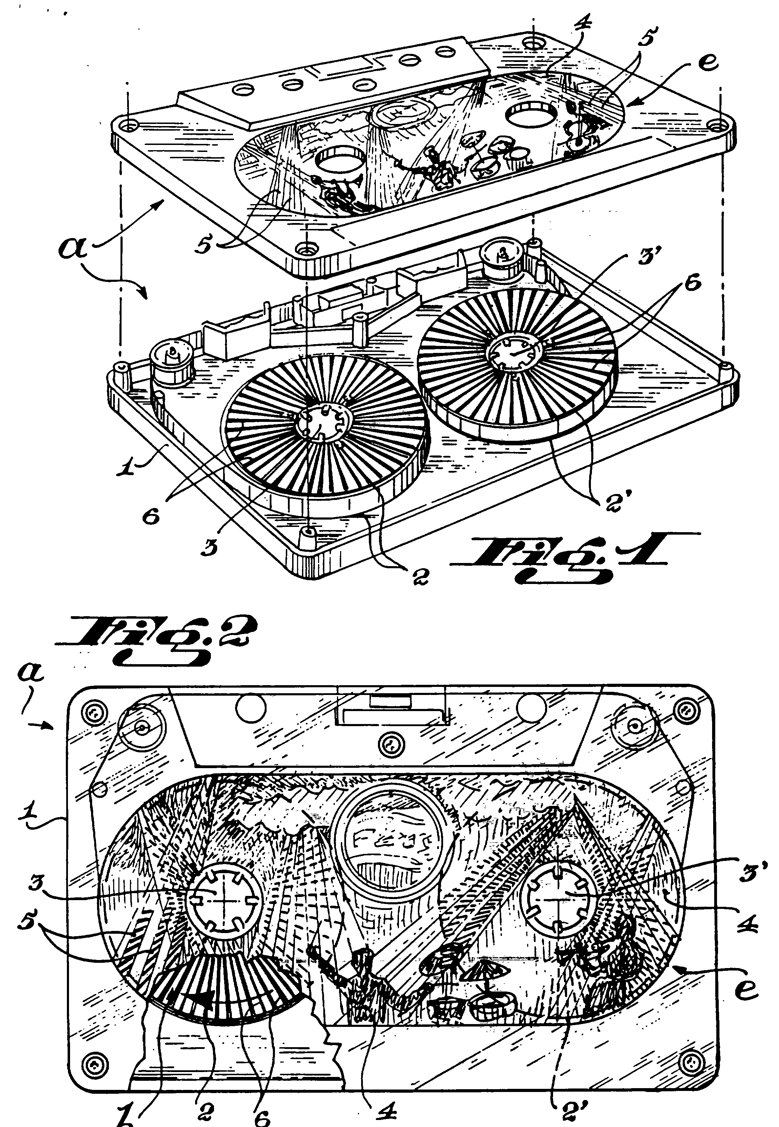

Referring now to Figs 1 to 3, the tape cassette is of a type comprising a housing (a) formed by two housing halves (1) with round corners, each of which has a main side surface and a rim. These housing halves (1) define a perimetrical area closed in three of its sides - two transversal and one longitudinal - and open in a longitudinal side edge forming a passage which, in use, faces a tape head of the recorder/reproducer equipment. The housing (a) contains rotatable reels (2) and (2') for reciprocally winding and unwinding the tape.

The reels (2) and (2') have internally toothed central holes (3) and (3') for engagement over drive spindles coupled to the motor axles of the recorder/reproducer equipment used.

More particularly, and as shown in the drawings, the externally presented flanges of each cassette reel have disks (b) with several traces or marks (6) printed obliquely relative to visualization fields or viewing areas (5), located in the front and reverse sides of the housing immediate adjacent to the said disks (b), (figure 1).

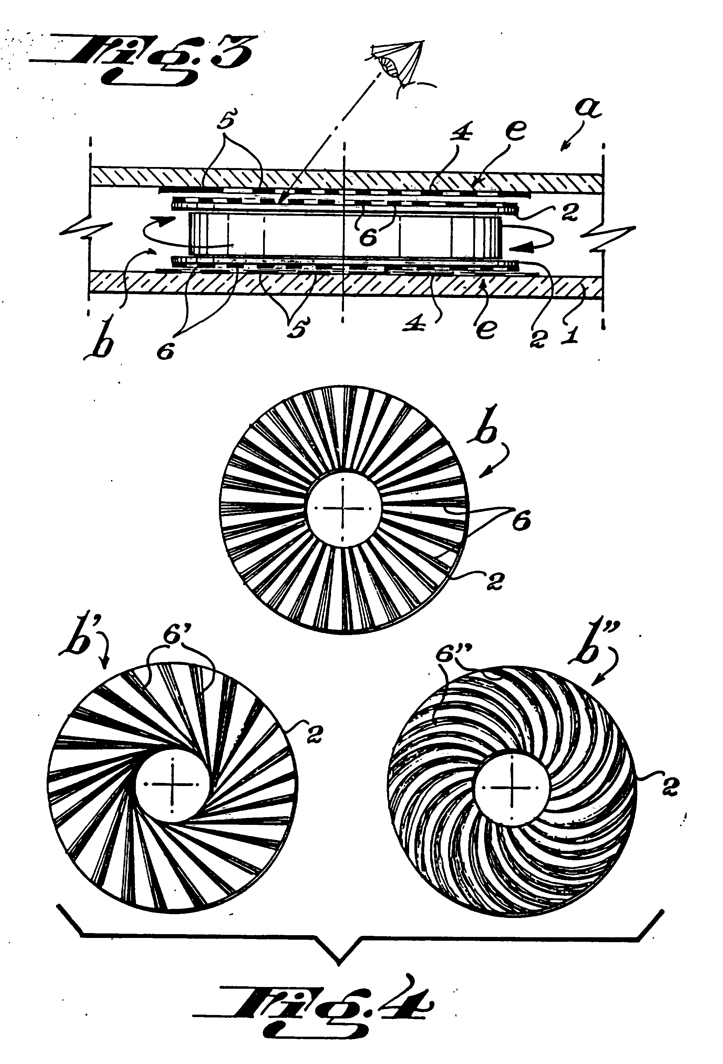

The said main side surface of each housing half (1) has a window therein in which a picture (e) on a sheet (4) is glued or is directly printed or recorded or using a printed sheet (or plate) on the said sides. The picture (e) is close to the optical effect obtained according to this invention, and for example depicts an orchestra playing, where certain of the instruments, (eg the wind section) show at their outlets the visualization zones or viewing areas (5) to form eolic effects; a panoramic view of waterfalls, water jumps coinciding with the said viewing areas (5) to form wave or water effects; a group of youngsters with non-alcoholic drink bottles whose mouths coincide with the visualization fields (5) to give the appearance of jets of drink coming out of the bottle; or a group of people dancing, between bright lights coinciding with the visualization fields (5), etc. (figures 2 and 3).

In order to form this effect, the main sides surfaces (1) are mostly opaque, whilst the visualization fields or viewing areas (5) are transparent so as to enable regions of the disks to be observed, using transclucent micro-cuts or micro traces (figures 1 to 3).

On the other hand, the disks (b) of reels (2) and (2') arranged by making then coincide under viewing areas (5) - as mentioned before - have several printed traces (6) that obliquely cross those traces or cuts of areas (5), and as a result rotational of the reels (2-2') are capable of defining the optical effect of waves or turbulence or interference depending on the circumstances, that complement the picture (e) forming the message of the visual communication.

With regard to the traces or marks on the disks (b), (b') or (b"), these can be radial (6), cyclic (6'), epicyclical (6"), etc (figure 4).

The picture (e) may be printed internally or externally of the housing. However, one of the most preferred production methods is one where the printing of picture (e) will be onto a separate sheet on the reels (2) and (2') of cassette (a). To this end,the housing could have a depression or a shallow recess sufficient merely to contain the said sheet.

To the same end as the previous production method, and as a variation it is possible for the said cavity to have rubber lugs used for keeping the said sheets with the pictures (e) in position.

As a further alternative, the sheet with the picture (e) may be adhesively secured to internal or externally sides of the cassette housing.

## Claims

1. A tape cassette comprising a housing (1) containing a pair of tape reels (2,2') rotatably mounted therein, at least one of the reels (2,2') having a disk (b,b',b") with a plurality of marks (6,6',6") thereon which obliquely cross viewing areas (5) provides in the housing (1), so as to produce an optical effect when the reels (2, 2') are rotated characterized in that the viewing areas (5) contain a transparent picture (e) such that a dynamic optical effect originates from the cooperation of said marks (6, 6', 6") with said picture (e).

2. A tape cassette as claimed in claim 1, wherein the at least one disk (b, b', b") has a variety of marks (6, 6', 6") thereon that obliquely cross the viewing areas (5) so as to produce an optical interference effect or turbulence upon rotation of the reels (2, *2').*

3. A tape cassette as claimed in claim 1 or 2, wherein the picture (e) is provided on or in the housing (1) so as to be viewable from the outside of the latter.

4. A tape cassette as claimed in claim 3, wherein the picture (e) is provided on a sheet (4) separate from the reels (2, 2') inside the housing (1).

5. A tape cassette as claimed in claim 4, wherein the sheet (4) is located in a shallow depression for the reels (2, 2') inside the housing (1).

6. A tape cassette as claimed in claim 4, wherein the sheet (4) having the picture (e) thereon is fixed in position using locating lugs.

7. A tape cassette as claimed in claim 3, wherein the sheet (4) having the picture (e) thereon is glued to the housing (1).

8. A tape cassette as claimed in claim 7, wherein the sheet (4) having the picture (e) thereon is glued to an internal surface of the housing (1).

9. A recording tape according to claim 7, wherein the sheet (4) having the picture (e) thereon is glued to an external surface of the housing (1).

## Patentansprüche

1. Bandkassette, die ein Gehäuse (1) umfaßt, das ein Paar Bandspulen (2,2') enthält, die drehbar darin angebracht sind, wobei wenigstens eine der Spulen (2,2') eine Scheibe (b,b',b") mit einer Vielzahl von Zeichen (6,6',6") darauf aufweist, die in dem Gehäuse (1) vorhandene Sichtflächen (5) schräg schneiden, so daß ein optischer Effekt entsteht, wenn die Spulen (2,2') gedreht werden, **dadurch gekennzeichnet,** daß die Sichtflächen (5) ein transparentes Bild (e) enthalten, so daß durch das Zusammenwirken der Zeichen (6,6',6") mit dem Bild (e) ein dynamischer optischer Effekt entsteht.

2. Bandkassette nach Anspruch 1, wobei wenigstens eine Scheibe (b,b',b") eine Vielzahl von Zeichen (6,6',6") darauf aufweist, die die Sichtflächen (5) schräg schneiden, so daß ein optischer Interferenzeffekt oder Wirbel beim Drehen der Spulen (2,2') erzeugt wird.

3. Bandkassette nach Anspruch 1 oder 2, wobei das Bild (e) auf oder in dem Gehäuse (1) vorhanden ist, so daß es von der Außenseite des letzteren sichtbar ist.

4. Bandkassette nach Anspruch 3, wobei das Bild (e) auf einer Folie (4) separat von den Spulen (2,2') im Inneren des Gehäuses (1) angeordnet ist.

5. Bandkassette nach Anspruch 4, wobei die Folie (4) in einer flachen Vertiefung für die Spulen (2,2') im Inneren des Gehäuses (1) angeordnet ist.

6. Bandkassette nach Anspruch 4, wobei die Folie (4) mit dem Bild (e) darauf unter Verwendung von Positioniervorsprüngen festgehalten wird.

7. Bandkassette nach Anspruch 3, wobei die Folie (4) mit dem Bild (e) darauf an dem Gehäuse (1) angeklebt ist.

8. Bandkassette nach Anspruch 7, wobei die Folie (4) mit dem Bild (e) darauf an einer Innenfläche des Gehäuses (1) angeklebt ist.

9. Aufzeichnungsband nach Anspruch 7, wobei die Folie (4) mit dem Bild (e) darauf an einer Außenfläche des Gehäuses (1) angeklebt ist.

## Revendications

1. Cassette pour bande comprenant un boîtier (1) contenant une paire de bobines de bande (2, 2') montées de façon à pouvoir tourner à l'intérieur de celui-ci, au moins l'une des bobines (2, 2') comportant un disque (b, b', b") avec une pluralité de marques (6, 6', 6") sur celui-ci, qui croisent en oblique des zones de visualisation (5) disposées dans le boîtier (1), de façon à produire un effet optique lorsque les bobines (2, 2') tournent, caractérisée en ce que les zones de visualisation (5) contiennent une image transparente (e), de telle sorte qu'un effet optique dynamique soit produit grâce à la coopération desdites marques (6, 6', 6") avec ladite image (e).

2. Cassette pour bande selon la revendication 1, dans laquelle au moins un disque (b, b', b") comporte sur lui une variété de marques (6, 6', 6") qui croisent en oblique les zones de visualisation (5) de façon à produire une turbulence ou un effet d'interférence optique lors de la rotation des bobines (2, 2').

3. Cassette pour bande selon la revendication 1 ou 2, dans laquelle l'image (e) est disposée sur ou dans le boîtier (1) de façon à pouvoir être vue de l'extérieur de dernier.

4. Cassette pour bande selon la revendication 3, dans laquelle l'image (e) est disposée sur une feuille (4) séparée des bobines (2, 2') à l'intérieur du boîtier (1).

5. Cassette pour bande selon la revendication 4, dans laquelle la feuille (4) est disposée dans une légère dépression pour les bobines (2, 2') à l'intérieur du boîtier (1).

6. Cassette pour bande selon la revendication 4, dans laquelle la feuille (4) sur laquelle se trouve l'image (e) est fixée en place grâce à l'utilisation de pattes de positionnement.

7. Cassette pour bande selon la revendication 3, dans laquelle la feuille (4) sur laquelle se trouve l'image (e) est collée au boîtier (1).

8. Cassette pour bande selon la revendication 7, dans laquelle la feuille (4) sur laquelle se trouve l'image (e) est collée à une surface intérieure du boîtier (1).

9. Cassette d'enregistrement selon la revendication 7, dans laquelle la feuille (4) sur laquelle se trouve l'image (e) est collée à une surface extérieure du boîtier (1).
